# EUROPEAN PATENT APPLICATION

(11) **EP 1 901 477 A1**
(43) Date of publication of application: **19.03.2008**
(21) Application number: 06270084.4
(22) Date of filing: 13.09.2006
(51) Int. Cl.: H04L 9/26, G06F 7/58

(54) **Random number generation**

(71) Applicant: Astrium Limited, Gunnels Wood Road Stevenage, Hertfordshire, SG1 2AS (GB)
(72) Inventor: The designation of the inventor has not yet been filed
(74) Representative: BAE SYSTEMS plc Group IP Department

(57) **Abstract**

A method and apparatus for obtaining, while on a spacecraft, a random number and hence a secure cryptographic key. The method includes the steps of providing, on the spacecraft, a device capable of producing random information when subject to random space phenomena, obtaining the random information and producing a random number therefrom and using an algorithm to establish the secure key. The apparatus includes a random access memory (RAM) which experiences bit-flips when struck by radiation such as cosmic rays. Changes in the RAM bits are propagated using a linear feedback shift register.

## Description

This invention relates to random number generation and in particular to the generation of random numbers for use in cryptography for secure communications to spacecraft or craft positioned or travelling on the edge of space. The word "space" is used hereafter to mean space or a region relatively near Earth or another planet but which is substantially outside an ionosphere of that planet and the word "spacecraft" means a craft positioned or travelling in space as thus defined.

Secure communications, whether between two or more spacecraft or between a spacecraft such as a satellite and the Earth or some other planet, are used for reasons of commercial secrecy. Key to one method of cryptographic communication is the generation of random numbers. Random numbers can also be useful in other fields, for example gambling, virus-protection etc but the use envisaged in this invention is cryptographic communication.

It is known for certain Earth-space cryptographic communication applications to use so-called symmetrical key encryption of communications between, say, a satellite and a ground station. In this method the same numerical key is stored at both the ground station and on the satellite. The key is unknown to others and a relatively secure link is possible using this method.

As the number of bits in the numerical key progressively increases, the effectiveness of a symmetrical key arrangement as compared to an asymmetric key agreement scheme is likely to reduce. An asymmetric key agreement scheme is where the communicating stations each generate a random number to be used to generate a key. A series of communication exchanges between the stations then takes place using a known algorithm. Although these communications between the stations can be intercepted by any interested third party, the third party knows neither of the selected asymmetric random numbers. Each station knows its own random number only. The mathematical process used between the stations enables a single secure key to be established which cannot be calculated by an observer. This process therefore depends upon the generation by each communicating party of a secure random number.

In order to use a key agreement scheme between a spacecraft and a ground station, it would be necessary for a random number to be generated on the spacecraft. For example, if a pseudorandom number were generated by a linear feedback shift register (LFSR), no matter how many bits the shift register contained, the number would not be considered sufficiently secure because It has a known starting position and follows a known pattern.

It is an object of the invention to provide a means of establishing a random number, ie, a number whose pattern cannot be determined, which means can be used on a spacecraft.

It is also an object of the invention to provide a means of obtaining a secure cryptographic key while on a spacecraft.

According to one aspect of the present invention there is provided a method of generating a random number on a spacecraft including the steps of providing a device having an output capable of outputting a series of bits wherein the output series of bits is susceptible to change following impact on the device of particles of radiation which occur freely in space, exposing the device to said radiation for a period sufficient to change at least one of the bits, and reading from the output the series of bits as changed by the said radiation whereby to produce the random number.

The method thus provides a means of generating a truly random number, in space, by using the naturally-occurring phenomenon of random space radiation such as cosmic rays. "Heavy ions" have long been known to cause bit flips in an electronic device such as a random access memory ("RAM") when they pass through it. Such events have been named "single event upsets" or "SEUs". In order for such SEUs to occur it is currently thought that the spacecraft has to be a distance of approximately 700km above the Earth to be sufficiently out of the Earth's influence to allow the radiation to be effective, at least with currently known devices.

The invention seeks to harness this phenomenon in a manner which provides a relatively cheap and simple-to-implement on-board process which is reliable and effective. The RAM and any other apparatus needed may be implemented, preferably in software alone, on a field programmable gate array ("FPGA") or an application specific integrated circuit ("ASIC") so cost, volume and weight are kept to a minimum. It is believed that other solutions to the problem of generating a random number on a spacecraft would involve the use of more hardware. This would add weight and would increase power consumption and would require qualification of the hardware and therefore be more expensive.

Thus the device may be a RAM and the step of reading from the device may comprise interrogating the RAM.

The method may include the step of providing a pseudorandom number generator to propagate a sequence of bits, readable as an output, and connecting the device to an input of the pseudorandom number generator whereby each change in output of the device will be propagated by the pseudorandom number generator. The pseudorandom number generator may conveniently be an LFSR and the step of propagating the change in the state, or output, of the device may include feeding back the output of the LFSR into the device.

The step of propagating the change in the output of the device may include the steps of:-
a) reading, from a first RAM address, the stored bits therein;
b) using the stored bits as seed values of the LFSR;
c) clocking the LFSR;
d) reading from a second RAM address the stored bits therein;
e) reading the bits output from the LFSR upon the clocking thereof;
f) combining the stored bits from the second RAM address with the bits output from the LFSR and inputting the result into the first RAM address;
g) reading from the second RAM address the stored bits therein and inputting the stored bits into the input of the LFSR;
h) clocking the LFSR;
   repeating steps c) to h) for successive RAM addresses until a final RAM address is reached whereupon reading the first RAM address as the next successive RAM address and, when required,
   interrupting steps c) to h) to successively clock the LFSR a required number of times to read out a series of bits of required length from the output of the LFSR.

This process has the effect of propagating as much as possible changes at the RAM output due to the bit-flips which have occurred as a result of the SEUs. The output of the LFSR is thus very different from the output of the RAM. A high clock speed, combined with a large number of bits in the RAM and in the LFSR has the effect of making available extremely long random numbers which are thus suitable to be used in the setting up of a cryptographic key, for example in an asymmetric key agreement, or key exchange, scheme.

The method may include setting the rate of clocking of the LFSR and a time period for which the method is operated before a random number is read out whereby to ensure a desired degree of change from a seed value existing in the LFSR at commencement of the method.

The device may be selected from the group: electronic and optical and also from the group: analogue and digital. Thus the principle of the invention - single event effects ("SEEs") causing changes in a device- can apply equally well to electronic or optical devices and to analogue or digital devices. If an analogue device were chosen it is possible that the changes due to SEEs would be occurring much more frequently than with a digital device as the SEE does not have to have sufficient force to cause a bit flip, only a small, perhaps instantaneous, change in state. A small change due to an SEE could then be detected, amplified and turned into a digital signal. There is no reason why any common analogue device with appropriate sensitivity should not be used, eg., resistor, capacitor, diode, inductor.

The use of a RAM in the preferred method and apparatus will of course store the change of state caused by the SEU, so interrogation at a later time will pick up an SEU-induced change. A RAM, for use in space, has the advantage that it is freely available, relatively cheap, lightweight (especially when implemented in a microchip) and likely to be available in space-qualified form.

The RAM and the LFSR may advantageously be incorporated into in a single microchip. Alternatively, say if a larger memory is required to harness bit-flips at a higher rate, the RAM may be formed separately, say in another microchip.

Advantageously the LFSR is provided with sufficient bit storage such that the total number of bits which may be generated by the LFSR before repeat is of far greater length than any single number which would be required to be read from the LFSR. For the purposes of generating a random number for use in obtaining a cryptographic key, a Samsung (Reg. trade mark) K6R4008CID RAM of 4 million bits was selected. With SEUs predicted to occur once every 15,000 days for each bit, when in geostationary orbit. The overall bit-flip rate for the RAM would be once every 5.4 minutes. Thus, in a one hour period 11.1 bit-flips would be expected. With a clocking rate of 1 MHz, each bit address would be read 6866 times in one hour. This would provide as random a number as would be likely to be needed.

According to a second aspect of the invention there is provided a method of obtaining, while on a spacecraft, a secure cryptographic key including the steps of providing, on the spacecraft, a device capable of producing random information when subject to random space phenomena, obtaining said random information and producing a random number therefrom, and executing an algorithm whereby to establish the secure key.

Other types of random space phenomenon are envisaged which would be possible to use in the invention.

According to third aspect of the invention there is provided spacecraft communication apparatus incorporating a device to generate random numbers, the device having an output capable of outputting a series of bits wherein the output series of bits is susceptible to change following impact on the device of packets of radiation which occur freely in space to enable the device to produce a random number, means connected to the device to communicate with a communication station remote from the apparatus and means to utilize the random number in the determination of a secure cryptographic communication key for communicating with the remote communication station.

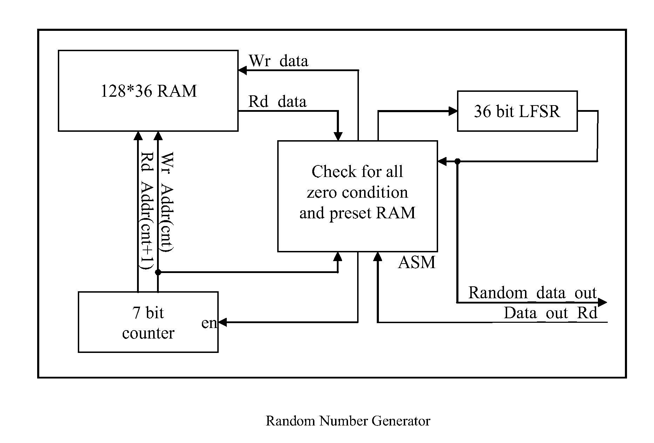

The invention will now be described by way of example with reference to the accompanying drawing.

According to the invention, spacecraft communication apparatus for communicating either with another spacecraft, e.g. a satellite, or a ground station on Earth or another planet is operable from a satellite in orbit to generate, when required, a random number for use in a cryptographic numerical key to enable secure communication from the satellite.

The invention lies in an apparatus and method for generating such a random number and for generating the secure cryptographic key to allow for the aforesaid secure communication. The random number generating part of the invention is illustrated in the drawing in block diagram form. A central algorithmic state machine (ASM) is operationally linked to a 4 megabit random access memory (RAM), a linear feedback shift register (LFSR) and a counter. The read and write links between the RAM and the ASM, on one hand, and the RAM and the counter, on the other hand, can be seen in the drawing. In addition the feedback from the LFSR, through the ASM to the RAM can be seen.

The invention is designed to use bit-flips experienced by the RAM when in space to produce truly random numbers, i.e. numbers whose pattern cannot be determined by an observer. The LFSR is implemented in sequential logic on a micro-chip and is used in conjunction with the RAM to ensure that bit-flip single event upsets (SEUs) are propagated.

In operation, each memory location in the RAM is read out in turn and loaded in the LFSR. The LFSR is then clocked once and each value is combined with the data at another RAM location and written back to the RAM. The LFSR is large enough in bit storage such that any practical required number of bits can be read out from it before the pattern starts to repeat (even assuming no SEUs have occurred in the RAM in the meantime).

Each RAM address will have a seed value written to it initially (any non zero value). Then each address in turn will be read out and stored in registers of an LFSR, conveniently a 36 bit LFSR. After the LFSR is clocked, the output is combined (via an XOR gate) with the data at the next successive RAM address and written back to the original RAM address. This process is continuous and after a given time the data in the RAM will be completely unpredictable and therefore random. Whenever a random number is required to be output from the apparatus, the above process is stopped and as many bits as are required are read out from the LFSR. With a 36 bit LFSR approximately 68 billion bits may be output before repeat occurs (even without SEUs occurring). Such pseudo-random outputs are also effectively random without any bit-flips occurring in the RAM so long as the exact time at which the sequence started and finished is not known and more so if the apparatus operates at a high clock rate.

As can been seen from the drawings, the ASM also constantly checks for the all zero condition in the RAM. If this condition occurs, the RAM will not operate. If such a condition is detected the ASM resets the RAM location to a known non-zero value.

When in operation, the apparatus acts as a large and complex random number generator. Each time an SEU occurs in the RAM it changes the pattern of the data stored in the RAM. As this data is output to the LFSR a small change in the data output from the RAM has a very large effect on the data being output from the LFSR.

Some sample computer code using a small internal RAM to carry out the method of the invention is set out below as an Annexe.

### ANNEXE

library IEEE;
use IEEE.std_logic_1164.all;
use IEEE.numeric_std.all;
use IEEE.std_logic_unsigned.all;
entity Top_level_RNG is
   port (Sysclock : in std_logic;
   Resetz : in std_logic;
   Data_out_RD : in std_logic;
   Random_data_out : out std_logic);
end Top_level_RNG;
architecture rtl of Top_level_RNG is
component RAM_128_36
   port ( Data in std_logic_vector(35 downto 0);
   Q : out std_logic_vector(35 downto 0);
   WAddress : in std_logic_vector(6 downto 0);
   RAddress : in std_logic_vector (6 downto 0);
   WE : in std_logic;
   RE : in std_logic;
   WClock : in std_logic;
   RClock : in std_logic);
end component;
signal
Wr_data, Rd_data, LFSR_data_in, LFSR_data_out, LFSR_data, Wr_data_int :
std_logic_vector(35 downto 0);
signal count, count_plus_1 : std_logic_vector(6 downto 0);
signal current_state,next_state : std_logic_vector(1 downto 0);
signal WE, RE, count_en : std_logic;
Begin

-- RAM port map
   Actel_RAM_128_36 : RAM_128_36 port map(Data=>Wr_data, Q=>Rd_data, WAddress=>count,RAddress=>count_plus_1,WE=>WE,RE=>RE, WClock=>Sysclock, RClock=>Sysclock);
-- 7 bit address counter
   Process (sysclock,resetz)
   Begin
   if resetz = '0' then
      count <= (others=>'0');
   elsif rising_edge(sysclock) then
   if count_en = '1' then
      count <= count_plus_1;
   end if;
   end if;
   end process;
   count_plus_1 <= count + '1';
-- LFSR registers
   process (sysclock,resetz)
   Begin
   if resetz = '0' then
      LFSR_data <= (others=>'0');
   elsif rising_edge(sysclock) then
      LFSR_data <= LFSR_data_in;
   end if;
   end process;
-- LFSR Feedback taps
   LFSR_data_out (35 downto 1) <= LFSR_data (34 downto 0);
   LFSR_data_out (0) <= LFSR_data (35) Xor LFSR_data (24);
-- The output is combined with the next input, with an xor gate Wr_data_int <= LFSR_data_out xor Rd_data;
-- state machine registers - 2 bit
   process (sysclock,resetz)
   Begin
   if resetz = '0' then
      current_state <= (others=>'0');
   elsif rising_edge (sysclock) then
      current_state <= next_state;
   end if;
   end process;
-- Main state machine
   process
   (current_state, count, Rd_data, LFSR_data_out, Data_out_RD, LFSR_data, Wr_da ta_int)
   begin
   next_state <= "00";
   WE <= '0';
   RE <= '0';
   count_en <= '0';
   LFSR_data_in <= (others=>'0');
   Wr_data <= (others=>'0');
   Random_data_out <= '0';
   case current_state is
-- All locations in RAM are set to the default number
   when "00" =>
   count_en <= '1';
   WE <= '1';
   Wr_data <= "001010000101101000101001000001011111";
   if count = "1111111" then
      next_state <= "01";
   else
      next_state <= "00";
   end if;
-- Allow a clock for the first read back data to be output from the RAM when "01" =>
   RE <= '1';
   next_state <= "10";
-- Allow a clock for the read back data to propagate through the LFSR
   when "10" =>
   RE <= '1';
   LFSR_data_in <= Rd data;
   next_state <= "11";
-- Loop back continously monitoring for the very unlikely all zero condition
-- unless the output is being read then hold until it has finished when "11" =>
   next_state <= "11";
   if Data_out_RD = '1' then
      Random_data_out <= LFSR_data(35);
      LFSR_data_in <= LFSR_data_out;
   else
      count_en <= '1';
      WE <= '1';
      RE <= '1';
      LFSR_data_in <= Rd_data;
      if Wr_data_int = "000000000000000000000000000000000000" then Wr_data <= "001010000101101000101001000001011111";
      else
      Wr_data <= Wr_data_int;
      end if;
   end if;
   when others =>
      null;
   end case;
   end process;
   end RTL;

## Claims

1. A method of generating a random number on a spacecraft including the steps of:-
providing a device having an output capable of outputting a series of bits wherein the output series of bits is susceptible to change following impact on the device of particles of radiation which occur freely in space;
exposing the device to said radiation for a period sufficient to change at least one of the bits, and
reading from the output the series of bits as changed by the said radiation whereby to produce the random number.

2. A method as in claim 1 in which the step of providing the device involves providing a RAM and in which the step of reading from the device comprises interrogating the RAM.

3. A method as in claim 1 or 2 including the step of providing a pseudorandom number generator to propagate a sequence of bits readable as an output and connecting the device to an input of the pseudorandom number generator whereby each change in output of the device will be propagated by the pseudorandom number generator.

4. A method as in claim 3 in which the step of providing the pseudorandom number generator involves providing a LFSR and in which the step of propagation of the change in the output of the device includes feeding back the output of the LFSR into the device.

5. A method as in claim 4, when dependant on claim 2, in which the step of propagating the change in the output of the device includes the steps of:-
a) reading from a first RAM address the stored bits therein;
b) using the stored bits as seed values of the LFSR;
c) clocking the LFSR;
d) reading from a second RAM address the stored bits therein;
e) reading the bits output from the LFSR upon said clocking thereof;
f) combining the stored bits from the second RAM address with the bits output from the LFSR and inputting the result into the first RAM address;
g) reading from the second RAM address the stored bits therein and inputting the stored bits into the input of the LFSR;
h) clocking the LFSR;
repeating steps c) to h) for successive RAM addresses until a final RAM address is reached whereupon reading the first RAM address as the next successive RAM address and, when required,
interrupting steps c) to h) to successively clock the LFSR a required number of times to read out a series of bits of required length from the output of the LFSR.

6. A method as in claim 5 including setting the rate of clocking of the LFSR and a time period for which the method is operated before a random number is read out whereby to ensure a desired degree of change from a seed value existing in the LFSR at commencement of the method.

7. A method as in any preceding claim in which the device provided is selected from the group: electronic and optical.

8. A method as in any preceding claim in which the device provided is selected from the group: analogue and digital.

9. A method as any preceding claim, when dependent upon claims 2 and 4, in which the RAM and the LFSR are provided in a single microchip.

10. A method as in any preceding claim, when dependent upon claims 2 and 4, in which the RAM and the LFSR are each provided in the form of a microchip.

11. A method as any preceding claim, when dependent upon claim 4, including the step of providing the LFSR with sufficient bit storage such that the total number of bits which may be generated by the LFSR before repeat is of greater length than any single number required to be read from the LFSR.

12. A method of obtaining, while on a spacecraft, a secure cryptographic key including the steps of:-
providing, on the spacecraft, a device capable of producing random information when subject to random space phenomena;
obtaining said random information and producing a random number therefrom, and
executing an algorithm whereby to establish the secure key.

13. Spacecraft communication apparatus incorporating a device to generate random numbers, the device having an output capable of outputting a series of bits wherein the output series of bits is susceptible to change following impact on the device of packets of radiation which occur freely in space to enable the device to produce a random number, means connected to the device to communicate with a communication station remote from the apparatus and means to utilize the random number in the determination of a secure cryptographic communication key for communicating with the remote communication station.
